# EUROPÄISCHE PATENTANMELDUNG

(11) **EP 0 534 179 A2**
(43) Veröffentlichungstag der Anmeldung: **31.03.1993**
(21) Anmeldenummer: 92114958.9
(22) Anmeldetag: 02.09.1992
(51) Int. Cl.: B29C 45/00, B29C 45/17, B29C 45/37

(54) **Verfahren und Vorrichtung zum Herstellen eines Kunststoff-Formlings durch Spritzgiessen sowie Verfahren zum Herstellen eines Verbundformkörpers**

(30) Priorität: 23.09.1991 DE 4131578
(71) Anmelder: Krauss-Maffei Aktiengesellschaft, D-80997 München (DE)
(72) Erfinder: Spötzl, Markus, Dipl.-Ing. (FH), W-8000 München 71 (DE); Karlinger, Peter, Dipl.-Ing., W-8900 Augsburg (DE); Rehm, Guido, Dipl.-Ing. (FH), W-8000 München 70 (DE); Bauer, Adolf, W-8037 Olching (DE)

(57) **Zusammenfassung**

Um eine Spritzgießform öffnen zu können, bevor sich der gespritzte Formling auf eine z.B. für die Weiterverarbeitung ungeeignete Verfestigungstemperatur abgekühlt hat, wird zwischen die Formwandung und der davon abzutrennenden Oberfläche des Formlings ein flüssiges oder gasförmiges Fluid als Trennmittel fein verteilt eingeführt, und/oder es wird dafür gesorgt, daß beim öffnen der Form lediglich eine dünne Oberflächenschicht des Formlings so weit abgekühlt ist, daß sie an der Formwandung nicht mehr klebt. Nach dem Öffnen der Form kann sich die Oberflächenschicht durch die im restlichen Volumen des Formlings gespeicherte Wärme wieder auf Weiterverarbeitungstemperatur aufheizen. Der Formling kann in diesem Zustand mit einer vorgefertigten Deckschicht verpreßt und dadurch ein laminierter Verbundformkörper hergestellt werden.

## Beschreibung

Die Erfindung betrifft ein Verfahren zum Herstellen eines Formlings aus Kunststoff durch Spritzgießen, bei dem durch Einspritzen von thermoplastischem Kunststoff mit einer Temperatur, bei der dieser fließfähig ist, in eine geschlossene Form ein Formling geformt und dann die Form geöffnet und dabei eine Oberfläche des Formlings von der zugehörigen Wandung der Form getrennt wird.

Beim üblichen Spritzgießen muß mit dem Öffnen der Form solange gewartet werden, bis sich der Formling auf eine Temperatur abgekühlt hat, bei der er sich hinreichend verfestigt hat, um nicht mehr an der Wandung der Form zu kleben. Anderenfalls ist ein rückstandsfreies Abtrennen von der Formwandung nicht möglich. Es kann jedoch bereits aus Gründen der Steigerung der Taktgeschwindigkeit erwünscht sein, mit dem Öffnen der Form bereits zu einem Zeitpunkt zu beginnen, an dem sich der Formling noch nicht bis zur Verfestigungstemperatur abgekühlt hat. Vor allem kann dies dann erwünscht sein, wenn der spritzgegossene Formling noch nicht das fertige Endprodukt ist, sondern einer Weiterverarbeitung unterzogen werden soll, z.B. durch Verbinden oder Laminieren mit einer vorgefertigten Deckschicht. Für ein solches Laminieren muß sich mindestens die Oberflächenschicht des Formlings in einem hinreichend fließfähigen und/oder klebfähigen Zustand befinden, also in einem Zustand, den sie für ein rückstandsfreies Abtrennen von der Wandung der Spritzgießform nicht haben darf.

Der Erfindung liegt die Aufgabe zugrunde, ein Verfahren zum Herstellen von Formlingen aus Kunststoff durch Spritzgießen so auszugestalten, daß das Öffnen der Form zu einem möglichst frühen Zeitpunkt stattfinden kann, bei dem der Formling einen für eine Weiterverarbeitung geeigneten Zustand aufweist. In weiterer Ausgestaltung der Erfindung soll ein möglichst einfach und mit geringen Energieverlusten arbeitendes Verfahren zum Herstellen von Verbundformkörpern durch Verbinden eines spritzgegossenen Formlings und einer Deckschicht angegeben werden.

Gemäß den in den Ansprüchen 1 und 4 angegebenen Verfahren wird die genannte Aufgabe dadurch gelöst, daß das Öffnen der Form zu einem Zeitpunkt erfolgt, an welchem der Formling noch eine so hohe Temperatur hat, daß sich der Kunststoff in einem noch nicht verfestigten, insbesondere für eine Weiterverarbeitung hinreichend fließ- und/oder klebfähigen Zustand befindet, und daß zusätzliche Maßnahmen angewendet werden, um ein Haften der Oberflächenschicht des Formlings an der Wandung der Spritzgießform zu vermeiden. Diese Maßnahmen bestehen gemäß Anspruch 1 darin, daß lediglich eine dünne Oberflächenschicht des Formlings auf eine Temperatur, bei der sich der Kunststoff klebefrei von der Wandung der Form lösen kann, gekühlt wird. Gemäß Anspruch 4 bestehen diese Maßnahmen darin, daß ein flüssiges oder gasförmiges Fluid gleichförmig über die Formwandung verteilt der Oberfläche des Formlings zugeführt wird. Dieses Fluid wirkt entweder lediglich als Trennmittel oder es bewirkt, wenn es erhitzt oder gekühlt ist, eine Änderung der Temperatur der Oberflächenschicht des Formlings, um diese zusätzlich zu verflüssigen oder zu verfestigen und dadurch ihr Haften an der Formwandung zu verhindern. Im letzteren Fall, wenn das zugeführte Fluid ein Kühlen der Oberflächenschicht bis in einen nicht mehr klebfähigen Zustand bewirkt, stellt sich dieses Verfahren als Ausführunggsform des erstgenannten Verfahrens dar. Eine besonders effektive Kühlwirkung erhält man, wenn das zugeführte Fluid eine an der Oberfläche des Formlings verdampfende Flüssigkeit ist.

Das Zuführen des flüssigen oder gasförmigen Fluids zu der Oberfläche des Formlings erfolgt vorzugsweise durch eine Vielzahl von über die Wandung der Spritzgießform verteilten Austrittsöffnungen. Bei einer bevorzugten Ausführungsform werden diese Austrittsöffnungen von den die Poren einer als poröse Schicht ausgebildeten Wandung der Spritzgießform gebildet. Die Erfindung betrifft somit auch eine Spritzgießform zur Durchführung des vorgenannten Verfahrens, deren Wandung eine Vielzahl von Austrittsöffnungen aufweist, insbesondere in der Form, daß die Wandung von einer porösen Schicht, insbesondere einer Schicht aus Sinterwerkstoff, gebildet wird, wobei die Austrittsöffnungen bzw. die poröse Schicht an eine Zuführung für ein Fluid angeschlossen sind.

In weiterer Ausgestaltung sieht die Erfindung auch ein Verfahren gemäß Anspruch 7 zum Herstellen von Verbundformkörpern vor, bei dem zunächst ein Formling durch Spritzgießen aus Kunststoff hergestellt wird, dann die Spritzgießform geöffnet wird, während der Formling noch eine für das Verbinden mit einer Deckschicht ausreichende Temperatur hat, mit Ausnahme lediglich einer dünnen Oberflächenschicht, die durch Abkühlen soweit verfestigt ist, daß sie nicht mehr an der Formwandung der Spritzgießform klebt, und bei dem anschließend die Deckschicht aufgelegt und mit dem Formling verpreßt wird, wobei die Oberflächenschicht des Formlings aufgrund der in der Hauptmasse des Formlings enthaltene Wärme wieder auf den für das Verbinden mit der Deckschicht hinreichend fließ- und klebfähigen Zustand gebracht wird. Dieses Wiedererhitzen der dünnen Oberflächenschicht kann durch zusätzliche Maßnahmen, z.B. Vorwärmen der Deckschicht und/oder Aufbringen von Strahlungswärme auf die Oberfläche des Formlings, unterstützt werden.

Es ist anzumerken, daß der in der vorliegenden Anmeldung verwendete Begriff "Spritzgießen" auch das sogenannte "Spritzprägen" umfassen soll. Beim Spritzprägen, das vor allem beim Herstellen von großflächigen, dünnwandigen Formteilen verwendet wird, werden die beiden Formhälften der Spritzgießform zunächst auf einen größeren als den endgültigen Abstand eingestellt, dann der Kunststoff eingespritzt und anschließend die beiden Formhälften bis zum Erreichen des endgültigen Abstandes gegeneinandergepreßt, um den eingespritzten Kunststoff über den gesamten Formhohlraum zu verteilen und auch in dessen periphere Bereiche zu pressen.

Ausführungsformen der Erfindung werden anhand der Zeichnungen näher erläutert. Es zeigt:
- Fig. 1 bis 4: verschiedene Phasen eines Herstellungsverfahrens zur Herstellung eines Verbundformkörpers gemäß einer Ausführungsform der Erfindung.
- Fig. 5 bis 7: verschiedene Phasen bei der Herstellung eines spritzgegossenen Formlings gemäß einer anderen Ausführungsform der Erfindung.

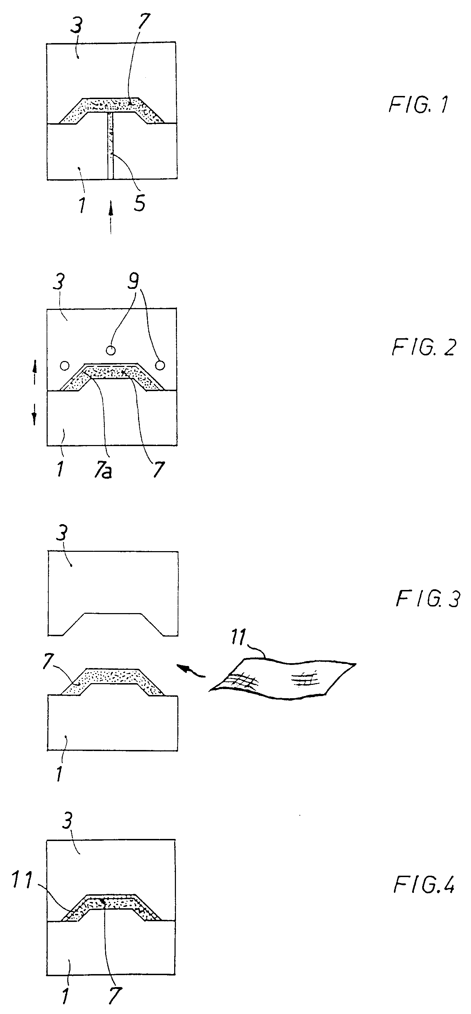

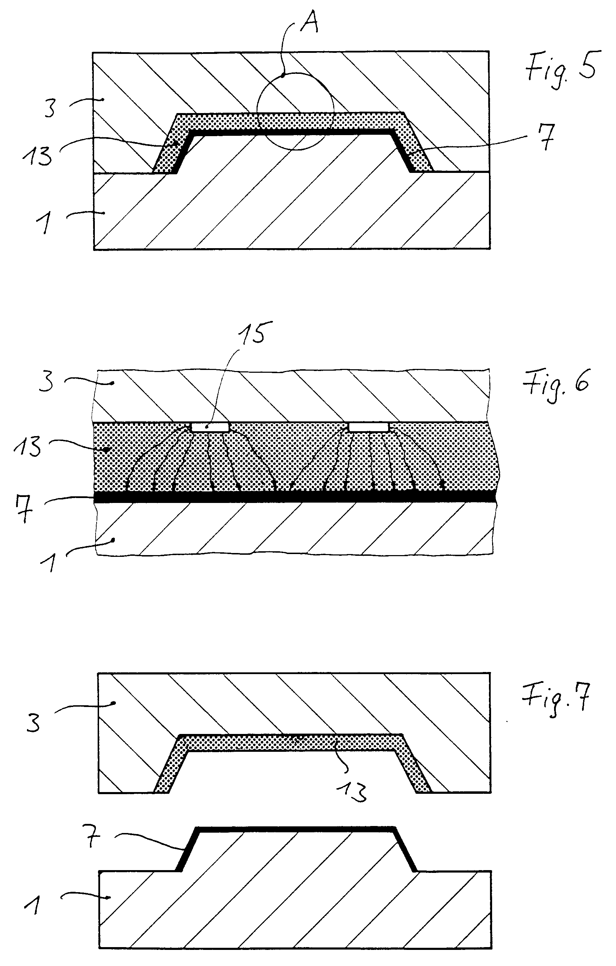

Bei dem in Fig. 1 bis 4 nur schematisch dargestellten Verfahren wird in einer aus den beiden Formhälften 1, 3 bestehenden Spritzgießform durch Einführen von fließfähigem, thermoplastischem Kunststoff durch einen oder mehrere Zuführkanäle 5 (nur in Fig. 1 dargestellt) ein der Kontur des Formhohlraums entsprechender Formling 7 gespritzt. Die bewegliche Formhälfte 3 ist in dem an den Formhohlraum angrenzenden Bereich durch Kühlmittel, welches durch Kühlmittelkanäle 9 (nur in Fig. 2 dargestellt) zirkuliert, derart kühlbar, daß der Formling 7, beginnend an seiner der Formhälfte 3 zugewandten Oberfläche, gekühlt wird, so daß sich zunächst eine dünne, hautartige Oberflächenschicht, in Fig. 2 gestrichelt bei 7a angedeutet, auf dieser Seite des Formlings zu verfestigen beginnt und ihre Fließfähigkeit und Klebfähigkeit verliert. Sobald dieser Zustand eingetreten, der Rest des Formlings 7 aber noch fließfähig ist (in Fig. 2 gepunktet angedeutet), wird die Formhälfte 3 von der Formhälfte 1 wegbewegt und dadurch die Form geöffnet. Dank der verfestigten Oberflächenschicht 7a erfolgt dabei ein klebefreies Abtrennen von der Formwandung der Formhälfte 3. Zwischen den Formling 7 und die Formhälfte 3 wird eine mit dem Formling 7 zu vereinigende Deckschicht 11 eingeführt (Fig. 3). Bei dieser Deckschicht kann es sich um ein beliebiges Material, vorzugsweise aber um ein Kunststoffmaterial handeln, z.B. um ein Kunststoffgewebe aus Kunststoffäden oder eine mit einem Oberflächendekor, einer Oberflächenstruktur (Narbung) oder dgl. versehene, vorgefertigte Kunststoffolie. Die eingebrachte Deckschicht 11 kann auch mehrschichtig sein, z.B. aus einem Gewebe oder einer Folie mit Schaumstoffrücken bestehen. Da der Formling 7 beim Einbringen der Deckschicht 11 nicht mehr mit der gekühlten Formhälfte 3 in Kontakt steht, wird die bereits verfestigte dünne Oberflächenschicht oder Oberflächenhaut 7a durch die in dem übrigen Kunststoffmaterial des Formlings 7 noch enthaltene Wärme wieder bis auf einen fließ- und/oder klebfähigen Zustand aufgeheizt, wie er für die Verbindung mit der Deckschicht 11 erforderlich ist. Nach dem Einbringen der Deckschicht 11 werden die Formhälften 1, 3 wieder gegeneinander bewegt, so daß die Form vollständig geschlossen und der Formling 7 mit der Deckschicht 11 durch Verpressen bleibend verbunden wird.

Das beschriebene Verfahren kann auch als Spritzprägen derart durchgeführt werden, daß bei dem Spritzen des Formlings 7 gemäß Fig. 1 die aus den Formhälften 1, 3 bestehende Form noch nicht vollständig geschlossen ist, d.h., daß die Wanddicke des Formhohlraums zunächst noch größer ist, als die gewünschte endgültige Wandstärke des Formlings. Erst bei dem Schritt des Verpressens des noch plastischen Formlings mit der Deckschicht 7 gemäß Fig. 4 wird die Form vollständig geschlossen und der aus dem Formling 7 und der Deckschicht 11 verstehende Verbundformkörper auf die endgültige Wanddicke gepreßt.

Wesentlich für das beschriebene Verfahren ist das Öffnen der Formhälften 1, 3 zu einem genau definierten, durch Kühlung der Formhälfte 3 beeinflußbaren Zeitpunkt, an welchem lediglich eine dünne, hautartige Oberflächenschicht 7a des Formlings 7 auf eine solche Temperatur abgekühlt ist, daß sie nicht mehr klebefähig ist und sich somit von der Wandung der Formhälfte 3 rückstandsfrei ablösen läßt. Der Hauptteil der Kunststoffmasse des Formlings 7 befindet sich dagegen noch auf einer so hohen Temperatur, daß er hinreichend fließ- und klebfähig ist, wie es für das Verbinden mit der Deckschicht 11 erforderlich ist.

Bei der Ausführungsform nach Fig. 5 bis 7 wird eine aus den Formhälften 1 und 3 bestehende Spritzgießform verwendet, bei der die den Formhohlraum begrenzende Wandung der beweglichen Formhälfte 3 von einer Schicht 13 aus einem porösen Material gebildet wird. Als poröses Material eignet sich insbesondere Sintermetall oder Sinterkeramik. In den Formhohlraum, der von der Formhälfte 1 und der porösen Auskleidung 13 der Formhälfte 3 begrenzt wird, wird durch (nicht dargestellte) Zuführkanäle thermoplastischer Kunststoff zur Herstellung des Formlings 7 eingespritzt.

Anschließend wird, wie in Fig. 6 dargestellt, durch in der porösen Schicht 13 vorgesehene Zuführkanäle 15 ein flüssiges oder gasförmiges Fluid durch die poröse Schicht 13 fein verteilt der Oberfläche des Formlings 7 zugeführt. Fig. 6 zeigt ein vergrößertes Detail im Bereich des Kreises A von Fig. 5. Durch die Zuführung des als Trennmittel wirkenden Fluids kann sich die Oberfläche des Formlings 7 von der porösen Schicht 13 auch dann trennen, wenn sich der Formling 7 noch auf einer Temperatur befindet, bei der der Kunststoff noch hinreichend fließfähig, plastisch und/oder klebefähig ist. Es ist deshalb möglich, die Form gemäß Fig. 7 zu öffnen, wobei sich der Formling 7 rückstandsfrei von der porösen Schicht 13 der Formhälfte 1 trennt, aber für eine weitere Verarbeitung noch hinreichend plastisch, fließfähig und/oder klebfähig ist, z.B. für die Verbindung mit einer Deckschicht ähnlich wie bei dem anhand von Fig. 1 bis 4 beschriebenen Verfahren. Das Verfahren gemäß Fig. 5 bis 7 kann aber auch dann vorteilhaft sein, wenn der Formling 7 nicht mit einer Deckschicht verbunden oder in sonstiger Weise weiterverarbeitet werden soll. Durch die Möglichkeit, die Form bereits zu öffnen, bevor der Formling 7 durch Abkühlen vollständig verfestigt ist, kann die Arbeitsgeschwindigkeit der Spritzgießmaschine erheblich gesteigert werden.

Das über die Kanäle 15 der porösen Schicht 13 zugeführte flüssige oder gasförmige Fluid kann ein solches sein, welches nach Art eines Haftungstrennmittels das Ablösen des Kunststoffs von der Formwandung bewirkt. In vielen Fällen wird es jedoch vorteilhaft oder notwendig sein, das zugeführte Fluid zu heizen oder zu kühlen, so daß es seinerseits eine Aufheizung oder Abkühlung der Oberflächenschicht des Kunststofformlings 7 bewirkt. Insbesondere kann es, wie bei dem Verfahren gemäß Fig. 1 bis 4 vorteilhaft sein, durch Zuführen eines kühlenden Fluids eine dünne Oberflächenschicht oder Oberflächenhaut des Formlings 7 so weit abzukühlen, daß sie einen verfestigten, nicht mehr klebfähigen Zustand einnimmt. Hierfür kann es ausreichen, und sogar vorteilhaft sein, das gekühlte Fluid nur kurzzeitig bzw. stoßartig zuzuführen, um die Verfestigung der dünnen Oberflächenschicht durch einen kurzen Kälteschock zu erzielen. Eine besonders effektive Kühlung kann durch Verwendung eines an der Oberfläche des Formlings 7 verdampfenden flüssigen Fluids erreicht werden.

Nach dem öffnen der Form gemäß Fig. 7 heizt die in der Kunststoffmasse des Formlings 7 enthaltene Wärme die dünne, abgekühlte Oberflächenschicht auf die zur Weiterverarbeitung (z.B. Kaschieren, Laminieren) notwendige Temperatur wieder auf.

## Patentansprüche

1. Verfahren zum Herstellen eines Formlings durch Spritzgießen, bei dem durch Einspritzen von thermoplastischem Kunststoff mit einer Temperatur, bei der dieser fließfähig ist, in eine geschlossene Form ein Formling geformt und dann die Form geöffnet, und dabei die Oberfläche des Formlings von der zugehörigen Formwandung getrennt wird, dadurch **gekennzeichnet,** daß beim Öffnen der Form der Formling eine solche Temperatur hat, bei der der Kunststoff des Formlings noch fließfähig, plastisch und/oder klebfähig ist, und daß vor dem Trennen der Oberfläche des Formlings von der Formwandung lediglich eine dünne, an die Formwandung angrenzende Oberflächenschicht des Formlings auf eine Temperatur gekühlt wird, bei der der Kunststoff klebefrei von der Formwandung ablösbar ist.

2. Verfahren nach Anspruch 1, dadurch **gekennzeichnet,** daß die Kühlung der Oberflächenschicht durch Kühlen der Wandung der Form erfolgt.

3. Verfahren nach Anspruch 1, dadurch **gekennzeichnet,** daß die Kühlung der Oberflächenschicht durch direkte Einwirkung eines Kühlfluids erfolgt, das fein verteilt durch die Formwandung der Oberfläche des Formlings zugeführt wird.

4. Verfahren zum Herstellen eines Formlings durch Spritzgießen, bei dem durch Einspritzen von thermoplastischem Kunststoff mit einer Temperatur, bei der dieser fließfähig ist, in eine geschlossene Form ein Formling geformt und dann die Form geöffnet, und dabei die Oberfläche des Formlings von der zugehörigen Formwandung getrennt wird, dadurch **gekennzeichnet,** daß vor und/oder während dem Trennen der Oberfläche des Formlings von der Formwandung ein flüssiges oder gasförmiges Fluid gleichmäßig über die Oberfläche der Formwandung verteilt der Oberfläche des Formlings zugeführt wird.

5. Verfahren nach Anspruch 4, dadurch **gekennzeichnet,** daß das Fluid durch gleichmäßig über die Formwandung verteilte Poren zugeführt wird.

6. Verfahren nach Anspruch 4, dadurch **gekennzeichnet,** daß das zugeführte Fluid auf eine höhere Temperatur als die Temperatur des Kunststoffs aufgeheizt und/oder auf eine niedrige Temperatur gekühlt ist.

7. Verfahren nach Anspruch 4 oder 6, dadurch **gekennzeichnet,** daß die Zuführung des Fluids kurzzeitig, insbesondere stoßartig, erfolgt.

8. Verfahren nach Anspruch 4, dadurch **gekennzeichnet,** daß das Fluid eine bei Kontakt mit dem Kunststoff verdampfende Flüssigkeit ist.

9. Verfahren zum Herstellen eines Verbundformkörpers, bei dem durch Spritzgießen in einer geschlossenen Form ein Formling aus thermoplastischem Kunststoff hergestellt, dann die Form geöffnet und auf den Formling eine vorgefertigte Deckschicht aufgelegt wird und dann Formling und Deckschicht durch Pressen miteinander verbunden werden, dadurch **gekennzeichnet,** daß die Form geöffnet wird, während der Formling eine ausreichend hohe Temperatur hat, bei der sich der Kunststoff in einem für das Verpressen mit der Deckschicht ausreichend fließfähigen, plastischen oder klebefähigen Zustand befindet, mit Ausnahme einer dünnen Oberflächenschicht des Formlings, die auf eine für das Ablösen von der Formwandung geeignete Temperatur gekühlt wurde,
und daß nach dem Öffnen der Form die Oberflächenschicht des Formlings auf die zur Verbindung mit der Deckschicht geeignete Temperatur gebracht wird.

10. Verfahren nach Anspruch 9, dadurch **gekennzeichnet,** daß die Oberflächenschicht durch die in der Kunststoffmasse des Formlings gespeicherte Wärme auf die höhere Temperatur aufgeheizt wird.

11. Spritzgießform zur Durchführung des Verfahrens nach einem der Ansprüche 2 bis 8, dadurch **gekennzeichnet,** daß die den Formhohlraum begrenzende Wandung mindestens einer Formhälfte (3) eine Vielzahl von Austrittsöffnungen aufweist, an die eine Zuführung (15) für ein Fluid angeschlossen ist.

12. Spritzgießform nach Anspruch 11, dadurch **gekennzeichnet,** daß die Austrittsöffnungen von den Poren einer die Innenwandung der Formhälfte bildenden porösen Schicht (13) gebildet sind.

13. Spritzgießform nach Anspruch 12, dadurch **gekennzeichnet,** daß die poröse Schicht (13) aus einem Sinterwerkstoff, insbesondere Sintermetall oder Sinterkeramik, besteht.
